# EUROPÄISCHE PATENTSCHRIFT

(11) **EP 3 814 627 B1**
(45) Veröffentlichungstag und Bekanntmachung des Hinweises auf die Patenterteilung: **25.10.2023**
(21) Anmeldenummer: 19731280.4
(22) Anmeldetag: 17.06.2019
(51) Int. Cl.: F03D 7/02

(54) **VERFAHREN UND STEUERUNG ZUM BETREIBEN EINER WINDENERGIEANLAGE**
METHOD AND CONTROLLER FOR OPERATING A WIND TURBINE
PROCÉDÉ ET COMMANDE SERVANT À FAIRE FONCTIONNER UNE ÉOLIENNE

(30) Priorität: 28.06.2018 DE 102018005134
(43) Veröffentlichungstag der Anmeldung: 05.05.2021
(73) Patentinhaber: Siemens Gamesa Renewable Energy Service GmbH, 20097 Hamburg (DE)
(72) Erfinder: WARFEN, Karsten, 23795 Weede/Söhren (DE); GOSCH-PLESS, Timo, 24783 Osterrönfeld (DE)
(74) Vertreter: Schlotter, Alexander Carolus Paul
(86) Internationale Anmeldenummer: PCT/EP2019/065819
(87) Internationale Veröffentlichungsnummer: WO 2020/002014

(56) Entgegenhaltungen:
- EP-A2- 2 306 005
- WO-A1-2015/074664
- WO-A1-2015/086023
- WO-A1-2017/201460

## Beschreibung

Die vorliegende Erfindung betrifft ein Verfahren und eine Steuerung zum Betreiben einer Windenergieanlage, eine Windenergieanlage mit der Steuerung sowie ein Computerprogrammprodukt zur Durchführung des Verfahrens.

Aus der DE 10 2015 004 393 A1 ist ein Verfahren zum Betrieb einer Windenergieanlage bekannt, bei dem wenigstens eine die Schwingung eines Turmes der Windenergieanlage in Querrichtung abbildende Prozessgröße erfasst, auf Basis einer aus der wenigstens einen Prozessgröße ermittelbare Schwingungsintensität ein Verstärkungsfaktor ermittelt, auf Basis dieses Verstärkungsfaktors und der wenigstens einen Prozessgröße eine Stellgröße ermittelt und ein als Rollmoment bezeichnetes Reaktionsmoment eines Triebstrangs umfassend Rotor, Generator und gegebenenfalls Getriebe anhand der ermittelten Stellgröße beeinflusst wird.

Da sich das Rollmoment auf dem Turmkopf abstützt, kann durch dessen Beeinflussung eine auf den Turmkopf wirkende Abstützkraft verändert und dadurch eine Lateralschwingung des Turmes in Querrichtung regelungstechnisch gedämpft werden.

Aus der WO 2015/086023 A1 ist ein Verfahren bekannt, bei dem der Anstellwinkel von jedem Rotorblatt gesteuert werden kann, wenn der Turm der Anlage in einem Stromerzeugungszustand im Trudeln oszilliert, um mit aerodynamischen Kräften eine aktive Dämpfung zu erzeugen, die der Oszillation des Turms entgegenwirkt.

Aus der WO 2015/074664 A1 ist Verfahren bekannt, bei dem die Blattwinkelstellung der Rotorblätter aktiv eingestellt werden, um bei extremen Windereignissen oder extremen Windlasten eine Generatorgeschwindigkeit bei einem Wert zu halten, der nicht Null ist und unter dem Nennwert liegt, wenn eine Windgeschwindigkeit oberhalb der Abschaltwindgeschwindigkeit liegt.

Aufgabe der vorliegenden Erfindung ist es, eine Windenergieanlage bzw. deren Betrieb zu verbessern.

Diese Aufgabe wird durch ein Verfahren mit den Merkmalen des Anspruchs 1 gelöst. Ansprüche 8 - 10 stellen eine Steuerung bzw. ein Computerprogrammprodukt zur Durchführung eines hier beschriebenen Verfahrens bzw. eine Windenergieanlage mit einer hier beschriebenen Steuerung unter Schutz. Die Unteransprüche betreffen vorteilhafte Weiterbildungen.

Nach einer Ausführung der vorliegenden Erfindung weist eine Windenergieanlage einen Turm und einen an einem Turmkopf, in einer Ausführung einer

Maschinengondel, angeordneten Rotor mit wenigstens einem Rotorblatt auf, das um eine Blatteinstellachse verstellbar ist.

Der Turm ist in einer Ausführung in einem Gewässer, in einer Weiterbildung vor einer Küste, angeordnet ("offshore").

Bei solchen Windenergieanlagen kann die vorliegende Erfindung insbesondere aufgrund von Schwingungsanregungen durch das Gewässer, insbesondere Wellenlasten, mit besonderem Vorteil eingesetzt werden, ohne hierauf beschränkt zu sein.

Der Rotor bzw. der Turmkopf, insbesondere also die Maschinengondel, wird in einer Ausführung, in einer Weiterbildung mithilfe eines, insbesondere elektrischen und/oder hydraulischen, Antriebs, um eine Nachführachse quer zu seiner Rotationsachse gegenüber einem Turmrumpf verstellt, insbesondere einer Windrichtung nachgeführt bzw. die Windenergieanlage hierzu bzw. entsprechend eingerichtet.

Zusätzlich oder alternativ schließt die Rotationsachse in einer Ausführung mit der Schwerkraftrichtung einen Winkel von wenigstens 60°, insbesondere wenigstens 70°, in einer Ausführung wenigstens 75°, und/oder höchstens 120°, insbesondere höchstens 110°, in einer Ausführung höchstens 105°, ein, ist also in einer Ausführung, wenigstens im Wesentlichen, horizontal.

Zusätzlich oder alternativ schließt die Nachführachse in einer Ausführung mit der Schwerkraftrichtung einen Winkel von höchstens 30°, insbesondere höchstens 20°, in einer Ausführung höchstens 10°, ein, ist also in einer Ausführung, wenigstens im Wesentlichen, vertikal.

Zusätzlich oder alternativ weist in einer Ausführung der Rotor wenigstens zwei und/oder höchstens fünf, in einer Weiterbildung genau drei, Rotorblätter auf, die jeweils, in einer Ausführung einzeln bzw. individuell, in einer anderen Ausführung gemeinsam bzw. synchron, um eine Blatteinstellachse verstellbar sind, in einer Ausführung (jeweils) mithilfe eines, insbesondere elektrischen und/oder hydraulischen, Antriebs. In einer anderen Ausführung weist der Rotor nur (genau) ein Rotorblatt auf. Hierdurch kann jeweils, insbesondere in Kombination von zwei oder mehr dieser Merkmale bzw. Ausführungen, Wind- besonders vorteilhaft in elektrische Energie umgesetzt werden.

Nach einer Ausführung der vorliegenden Erfindung weist ein Verfahren zum Betreiben der Windenergieanlage einen ersten Betriebsmodus auf, in dem das Rotorblatt bzw. eines oder mehrere, vorzugsweise alle Rotorblätter des Rotors (jeweils) eine, in einer Ausführung dieselbe Betriebswinkelstellung, um die (jeweilige) Blatteinstellachse aufweisen und eine windkraftbedingte bzw. durch Wind induzierte Rotation des Rotors mithilfe einer Generatoreinrichtung in elektrische Energie bzw. Leistung umgesetzt wird, welche von der Windenergieanlage in ein elektrisches Netz abgegeben und/oder gespeichert wird.

In einer Ausführung weist die Generatoreinrichtung wenigstens einen mit dem Rotor (dreh)koppelbaren bzw. (dreh)gekoppelten Generator auf und/oder ist in dem Turmkopf, insbesondere also die Maschinengondel, angeordnet. Die Generatoreinrichtung umfasst in einer Ausführung eine Umrichtersystem, über das das Generatormoment vorteilhafterweise in weiten Grenzen frei einstellbar ist.

In einer Weiterbildung ist der Generator durch wenigstens ein Getriebe der Generatoreinrichtung mit dem Rotor koppelbar bzw. gekoppelt, das in einer Ausführung eine Drehzahl des Rotors ins Schnelle(re) übersetzt.

Hierdurch kann in einer Ausführung Wind- besonders vorteilhaft in elektrische Energie umgesetzt werden.

Gleichermaßen kann die Windenergieanlage auch eine getriebelose Generatoreinrichtung aufweisen bzw. eine Rotation des Rotors getriebelos in elektrische Energie bzw. Leistung umsetzen bzw. hierzu eingerichtet sein.

Hierdurch kann die Windenergieanlage vorteilhaft weniger (schnell)rotierende Teile und somit weniger Verschleiß aufweisen.

Der erste Betriebsmodus ist in einer Ausführung ein Teillastmodus, der in einer Ausführung bei Windgeschwindigkeiten im Bereich von etwa 4 bis etwa 12 m/s bzw. oberhalb einer Einschalt- und unterhalb einer Nenn(wind)geschwindigkeit durchgeführt wird.

Entsprechend weist in einer Ausführung das (jeweilige) Rotorblatt in der bzw. seiner Betriebswinkelstellung einen sogenannten Pitch- bzw. Blatteinstellwinkel von, wenigstens im Wesentlichen, 0° um seine Blatteinstellachse auf, insbesondere einen fine Pitch bzw. optimalen Blatteinstellwinkel bei optimaler Schnelllaufzahl des Rotors, die gleich dem Quotienten aus dem Produkt der Rotordrehzahl und der Länge des Rotorblatts von der Rotationsachse bis zur Blattspitze dividiert durch die Windgeschwindigkeit ist, wobei optimaler Blatteinstellwinkel und optimale Schnelllaufzahl jeweils durch die bzw. bei der maximalen Rotorleistung bei vorgegebener Windgeschwindigkeit, also dem maximalen Leistungsbeiwert, definiert sind.

Nach einer Ausführung der vorliegenden Erfindung ist nun (wenigstens) ein zweiter Betriebsmodus vorgesehen, in dem das Rotorblatt bzw. eines oder mehrere, vorzugsweise alle Rotorblätter des Rotors (jeweils) gegenüber der Betriebswinkelstellung um wenigstens 60°, insbesondere wenigstens 70°, in einer Ausführung wenigstens 80°, und/oder höchstens 110°, insbesondere höchstens 100°, in einer Ausführung höchstens 95°, besonders bevorzugt wenigstens 84° und/oder höchstens 94°, um die (jeweilige) Blatteinstellachse in eine, in einer Ausführung dieselbe, Dämpfungswinkelstellung verstellt bzw. -dreht ist/sind, insbesondere wird/werden, und ein den Rotor bremsendes Gegendrehmoment, insbesondere in einem Triebstrang umfassend Rotor und Getriebeeinrichtung, auf Basis bzw. in Abhängigkeit von einer Schwingung des Turmes geregelt, insbesondere moduliert, wird, insbesondere zur Reduzierung dieser Schwingung bzw. mit derart bzw. mit der Maßgabe, diese Schwingung des Turmes zu reduzieren.

Wie einleitend mit Bezug auf die DE 10 2015 004 393 A1 erläutert, bewirken ein windkraftbedingtes Drehmoment am Rotor ("aerodynamisches Moment" bzw. "Rotormoment" und ein diesem entgegenwirkendes bzw. den Rotor bremsendes Gegendrehmoment eine Abstützkraft am Turmkopf, so dass durch Regelung des Gegendrehmoments und damit der Abstützkraft eine Schwingung des Turmes regelungstechnisch reduziert bzw. gedämpft werden kann. Ergänzend wird auf die Offenbarung der DE 10 2015 004 393 A1, insbesondere die dort offenbarte Reglerstruktur bzw. regelungstechnische Umsetzung, Bezug genommen.

Somit liegt einer Ausführung der vorliegenden Erfindung die Idee zugrunde, eine regelungstechnische Schwingungsdämpfung in einem Betriebsmodus durchzuführen, in dem das bzw. die Rotorblätter in etwa Fahnenstellung aufweisen, in welcher der Rotor eine Windanströmung parallel zu seiner Rotationsachse in eine minimale Drehzahl umsetzt.

Eine solche Fahnenstellung wird üblicherweise entweder bei Windgeschwindigkeiten unterhalb einer Einschaltwindgeschwindigkeit, die üblicherweise im Bereich von 4 m/s liegt, und/oder Windgeschwindigkeiten oberhalb einer Abschaltgeschwindigkeit, die üblicherweise im Bereich von 25 m/s liegt, eingestellt. Somit ist in einer Ausführung die Fahnenstellung eines Rotorblatts, in der der Rotor eine Windanströmung parallel zu seiner Rotationsachse in ein minimales Drehmoment umsetzt, um wenigstens 80° und/oder höchstens 100°, vorzugsweise um 90°, gegen die Betriebswinkelstellung des Rotorblatts verdreht, die somit in einer Ausführung auch hierdurch definiert sein kann. In einer Ausführung wird bzw. ist das Rotorblatt bzw. werden bzw. sind die Rotorblätter in dem zweiten Betriebsmodus (jeweils) von der bzw. ihrer Betriebswinkelstellung in Richtung auf die bzw. ihre Fahnenstellung in die bzw. ihrer Dämpfungswinkelstellung verstellt bzw. -dreht. Mit anderen Worten wird bzw. ist in einer Ausführung in dem zweiten Betriebsmodus die (stromaufwärtige bzw. windangeströmte) Vorderkante des (jeweiligen) Rotorblatts aus der Betriebswinkelstellung in die (Wind)Anströmung (hinein)gedreht.

Damit kann nach einer Ausführung der vorliegenden Erfindung (auch) bei Windgeschwindigkeiten unterhalb der Einschaltwindgeschwindigkeit, insbesondere also bei stehendem oder trudelndem Rotor, und/oder oberhalb der Abschaltgeschwindigkeit , bei denen das bzw. die Rotorblätter in etwa Fahnenstellung aufweisen, eine Schwingung des Turmes vorteilhaft regelungstechnisch reduziert bzw. gedämpft werden.

Entsprechend wird in einer Ausführung von dem ersten in den zweiten Betriebsmodus umgeschaltet, falls eine Windgeschwindigkeit eine, insbesondere vorgegebene, in einer Ausführung einstellbare, Abschalt(wind)geschwindigkeit der Windenergieanlage übersteigt bzw. dies erfasst, insbesondere sensortechnisch erfasst oder prognostiziert, wird. Die Abschalt(wind)geschwindigkeit beträgt in einer Ausführung wenigstens 20 m/s, insbesondere wenigstens 23 m/s, und/oder höchstens 35 m/s, insbesondere höchstens 27 m/s. In einer Ausführung wird ein Vollastbetrieb oder eine Netzeinspeisung bzw. eine Abgabe elektrischer Leistung in das elektrische Netz beendet, falls eine Windgeschwindigkeit die Abschalt(wind)geschwindigkeit übersteigt bzw. dies erfasst, insbesondere sensortechnisch erfasst oder prognostiziert, wird, insbesondere kann die Abschalt(wind)geschwindigkeit derart definiert sein, dass bei ihr ein Vollastbetrieb oder eine Netzeinspeisung beendet wird.

Zusätzlich oder alternativ wird in einer Ausführung von dem ersten in den zweiten Betriebsmodus umgeschaltet, falls ein, insbesondere (vor)bestimmter, Störungsfall erfasst wird.

In einer Ausführung kann der ((vor)bestimmte) Störungsfall eine Störung der Windenergieanlage, insbesondere eine Fehlfunktion in ihrer Rotorblattverstellung, ein Übersteigen einer zulässigen Betriebstemperatur in einem Bauteil oder einem Fluid der Windenergieanlage oder eine andere Störung der Windenergieanlage sein, die einen regulären (Produktions)Betrieb der Windenergieanlage nicht zulässt, bzw. ein ((vor)bestimmter) Störungsfall erfasst werden, falls eine solche Störung erfasst wird.

Zusätzlich oder alternativ kann der ((vor)bestimmte) Störungsfall in einer Ausführung eine Störung in einem bzw. dem elektrischen Netz sein, an bzw. in das die Windenergieanlage elektrische Leistung abgibt, bzw. ein ((vor)bestimmter) Störungsfall erfasst werden, falls eine solche Störung erfasst wird. Der Begriff Störung umfasst hierbei insbesondere eine Abschaltung aufgrund begrenzter Netzeinspeisekapazitäten.

Zusätzlich oder alternativ kann der ((vor)bestimmte) Störungsfall in einer Ausführung eine Störung in einer Speichereinrichtung sein, in der die Windenergieanlage elektrische Leistung speichert, bzw. ein ((vor)bestimmter) Störungsfall erfasst werden, falls eine solche Störung erfasst wird.

Somit liegt einer Ausführung der vorliegenden Erfindung die Idee zugrunde, eine regelungstechnische Schwingungsdämpfung bei einer Störung durchzuführen, wobei das bzw. die Rotorblätter in etwa Fahnenstellung aufweisen und so das Risiko einer Beschädigung (weiter) minimiert wird.

In einer Ausführung wird das den Rotor bremsende Gegendrehmoment mithilfe der Generatoreinrichtung geregelt, in einer Weiterbildung dadurch, dass das bremsende Gegendrehmoment derart bzw. mit der Maßgabe geregelt, insbesondere in Amplitude, Phase und/oder Frequenz, moduliert wird, dass eine durch das Gegendrehmoment aufgeprägte Abstützkraft am Turmkopf der zu reduzierenden bzw. dämpfenden Schwingung entgegenwirkt bzw. diese reduziert bzw. dämpft, in einer Ausführung wie vorstehend mit Bezug(nahme) auf die DE 10 2015 004 393 A1 erläutert. In einem sehr einfachen Beispiel kann etwa bei einer (erfassten) Schwingung des Turms in eine Richtung das Gegendrehmoment mithilfe der Generatoreinrichtung derart geregelt werden, dass die dadurch am Turmkopf aufgeprägte Abstützkraft gegensinnig hierzu wirkt, wobei der Betrag der Abstützkraft bzw. des Gegendrehmoments entsprechend von der Schwingung, insbesondere ihrer Schwingungsamplitude und/oder -frequenz, abhängen kann, beispielsweise also von einer Beschleunigung des Turmkopfes oder dergleichen.

Zusätzlich oder alternativ wird das den Rotor bremsende Gegendrehmoment in einer Ausführung auf Basis (eines Signals) wenigstens eines Schwingungssensors geregelt, der in einer Weiterbildung Beschleunigungen misst bzw. hierzu eingerichtet ist bzw. verwendet wird und/oder zwischen 25% und 70%, insbesondere zwischen 35% und 65%, in einer Ausführung zwischen 40% und 60%, oder zwischen 70% und 100% einer Turmhöhe zwischen Fundament und Turmkopfspitze und/oder in oder unter einer den Rotor lagernden Maschinengondel des Turmes angeordnet ist.

Der Turm kann vereinfacht als Krag- bzw. einseitig eingespannter Biegebalken mit Endmasse in Form des Turmkopfes, insbesondere also der Maschinengondel, betrachtet werden, dessen erste (Biege)Eigenform ihre maximale Auslenkung am Turmkopf und dessen zweie (Biege)Eigenform ihre maximale Auslenkung im Bereich der Turmmitte aufweist.

Entsprechend können in einer Ausführung mithilfe solcher Schwingungssensoren Schwingungen, insbesondere einer ersten bzw. zweiten (Biege)Eigenform bzw. eine Lateralschwingung des Turmes quer zur Rotationsachse des Rotors besonders vorteilhaft erfasst und somit regelungstechnisch reduziert bzw. gedämpft werden.

Allgemein ist die Schwingung des Turmes, die regelungstechnisch reduziert bzw. gedämpft wird bzw. auf deren Basis bzw. zu deren Reduzierung bzw. Dämpfung das Gegendrehmoment geregelt, in einer Ausführung in Amplitude, Phase und/oder Frequenz moduliert, wird, eine Lateralschwingung des Turmes, insbesondere einer ersten oder zweiten Eigenform des Turms und/oder quer zu einer Rotationsachse des Rotors und/oder Nachführachse des Turmkopfes.

Solche Schwingungen können durch die vorliegende Erfindung besonderem vorteilhaft reduziert bzw. gedämpft werden, ohne dass die Erfindung hierauf beschränkt ist.

In einer Ausführung wird das den Rotor bremsende Gegendrehmoment zur Aufrechterhaltung einer Richtung eines den Rotor antreibenden (resultierenden bzw. Gesamt)Drehmoment bzw. derart bzw. mit der Maßgabe geregelt, dass sich eine Drehrichtung bzw. ein Drehsinn eines de Rotor antreibenden bzw. auf den Rotor wirkenden (resultierenden bzw. Gesamt)Drehmoments infolge der Regelung nicht ändert, insbesondere ein im Triebstrang umfassend Rotor und Generatoreinrichtung wirkendes resultierendes Dreh- bzw. Torsionsmoment das Vorzeichen nicht ändert. In einer Ausführung ist hierzu die Amplitude der Drehmomentmodulation bzw. des Gegendrehmoments geringer als das aktuelle und/oder mittlere am Rotor anliegende bzw. wirkende Drehmoment, insbesondere um mehr als 10%, in einer Ausführung um mehr als 15% geringer, bzw. wird das den Rotor bremsende Gegendrehmoment mithilfe der Generatoreinrichtung derart geregelt. In einem sehr einfachen Beispiel kann etwa bei einer Verringerung des windkraftbedingten bzw. -induzierten aerodynamischen bzw. Rotormoments auch das Gegendrehmoment reduziert werden, um eine Richtung des den Rotor beaufschlagenden bzw. antreibenden Gesamtdrehmoments bzw. im Triebstrang umfassend Rotor und Generatoreinrichtung wirkende resultierenden Dreh- bzw. Torsionsmoments regelungstechnisch aufrechtzuerhalten.

Hierdurch kann in einer Ausführung vorteilhaft ein Getrieberasseln und/oder -hämmern reduziert bzw. vermieden werden.

In einer Ausführung wird das den Rotor bremsende Gegendrehmoment auch in dem ersten Betriebsmodus auf Basis einer bzw. der Schwingung des Turmes geregelt, wodurch auch hier, insbesondere also in einem Teil- oder Vollastbetrieb der Windenergieanlage, Belastungen durch Schwingungen des Turmes vorteilhaft reduziert werden können.

In einer Ausführung wird in dem zweiten Betriebsmodus eine windkraftbedingte Rotation des Rotors mithilfe der Generatoreinrichtung in elektrische Leistung umgesetzt, welche zur Verstellung des Rotorblatts bzw. der Rotorblätter um die (jeweilige) Blatteinstellachse und/oder zur Versorgung von Verbrauchern, in einer Ausführung Heizwiderständen und/oder Hilfsaggregaten, der Windenergieanlage genutzt und/oder von der Windenergieanlage in das elektrische Netz abgegeben und/oder gespeichert wird, insbesondere, indem das den Rotor bremsende Gegendrehmoment wenigstens teilweise durch die Generatoreinrichtung bzw. Erzeugung elektrischer Leistung aufgeprägt bzw. induziert wird.

Indem die, insbesondere beim bzw. durch das bzw. zum Regeln des Gegenmoments, erzeugte elektrischer Leistung wenigstens teilweise zur Verstellung des Rotorblatts bzw. der Rotorblätter genutzt wird, kann in einer Ausführung vorteilhaft die Dämpfungswinkelstellung bzw. auch wieder die Betriebswinkelstellung angefahren werden. Zusätzlich oder alternativ kann in einer Ausführung die Dämpfungswinkelstellung eventuellen erheblichen Änderungen in der Windgeschwindigkeit angepasst werden.

Indem die erzeugte elektrischer Leistung wenigstens teilweise in das elektrische Netz abgegeben und/oder gespeichert wird, kann in einer Ausführung vorteilhaft auch bei im Wesentlichen Fahnenstellung Windenergie genutzt werden. Gleichermaßen kann, wie vorstehend erläutert, in einer Ausführung in dem zweiten Betriebsmodus eine Netzeinspeisung auch beendet sein bzw. unterbleiben.

Indem die erzeugte elektrischer Leistung wenigstens teilweise zur Versorgung von Verbrauchern der Windenergieanlage genutzt, können in einer Ausführung die Verbrauchern vorteilhaft versorgt und/oder das Gegendrehmoment vorteilhaft geregelt werden.

In einer Ausführung beträgt diese im zweiten Betriebsmodus abgegebene bzw. gespeicherte Leistung höchstens 2%, in einer Ausführung höchstens 1%, einer Nennleistung der Windenergieanlage. Zusätzlich oder alternativ beträgt in einer Ausführung in dem zweiten Betriebsmodus eine Drehzahl des Rotors höchstens 20%, in einer Ausführung höchstens 10%, einer Nenndrehzahl der Windenergieanlage.

Somit liegt einer Ausführung der vorliegenden Erfindung die Idee zugrunde, eine regelungstechnische Schwingungsdämpfung auch bei Wind- bzw. Betriebsbedingungen durchzuführen, bei denen das bzw. die Rotorblätter in etwa Fahnenstellung aufweisen, so dass insbesondere das Risiko einer Beschädigung (weiter) minimiert wird.

In einer Ausführung wird der Rotor bzw. Turmkopf, insbesondere also die Maschinengondel, in dem ersten Betriebsmodus und/oder in dem zweiten Betriebsmodus in Abhängigkeit von einer Windrichtung um die Nachführachse verstellt bzw. -dreht, insbesondere gegenüber dem Turmrumpf und/oder derart, dass die, insbesondere vom Rotor zu der Generatoreinrichtung bzw. Maschinengondel hin orientierte, Rotationsachse des Rotors mit der Windrichtung einen Winkel einschließt, der höchstens 45°, insbesondere höchstens 30°, in einer Ausführung höchstens 15° beträgt, insbesondere also, wenigstens im Wesentlichen, parallel zur Windrichtung ist. Mit anderen Worten wird in einer Ausführung der Rotor bzw. Turmkopf, insbesondere also die Maschinengondel, in dem zweiten Betriebsmodus in den Wind gedreht bzw. dessen Richtung nachgeführt.

In einer Ausführung wird hierzu der Antrieb zur Verstellung von Rotor bzw. Turmkopf, insbesondere also Maschinengondel, um die Nachführachse in dem zweiten Betriebsmodus mit elektrischer Energie versorgt bzw. betrieben, die mithilfe der Generatoreinrichtung zum bzw. beim Regeln des Gegendrehmoments erzeugt wird.

Nach einer Ausführung der vorliegenden Erfindung ist eine bzw. die Steuerung für die, insbesondere der, Windenergieanlage, insbesondere hard- und/oder software-, insbesondere programmtechnisch, zur Durchführung eines hier beschriebenen Verfahrens eingerichtet und/oder weist auf:
- einen ersten Betriebsmodus bzw. Mittel zum Durchführen eines ersten Betriebsmodus bzw. Betreiben der Windenergieanlage in einem ersten Betriebsmodus, in dem das wenigstens eine Rotorblatt eine Betriebswinkelstellung um die Blatteinstellachse aufweist und eine windkraftbedingte Rotation des Rotors mithilfe einer Generatoreinrichtung (40, 41) in elektrische Leistung umgesetzt wird, welche von der Windenergieanlage in ein elektrisches Netz (52) abgegeben und/oder gespeichert wird; und
- einen zweiten Betriebsmodus bzw. Mittel zum Durchführen eines zweiten Betriebsmodus bzw. Betreiben der Windenergieanlage in einem zweiten Betriebsmodus, in dem das wenigstens eine Rotorblatt gegenüber der Betriebswinkelstellung um wenigstens 60° und/oder höchstens 110° um die Blatteinstellachse in eine Dämpfungswinkelstellung verstellt ist und ein den Rotor bremsendes Gegendrehmoment mithilfe der Generatoreinrichtung auf Basis einer Schwingung des Turmes geregelt
   wird

In einer Ausführung weist die Steuerung bzw. ihr(e) Mittel auf:
- Mittel zum Umschalten von dem ersten in den zweiten Betriebsmodus, falls eine Windgeschwindigkeit eine Abschaltgeschwindigkeit übersteigt und/oder falls ein Störungsfall erfasst wird; und/oder
- Mittel zum Regeln des den Rotor bremsenden Gegendrehmomentes auf Basis wenigstens eines, insbesondere zwischen 25% und 70% oder 70% und 100% einer Turmhöhe und/oder in oder unter einer den Rotor lagernden Maschinengondel des Turmes angeordneten, Schwingungssensors (11) und/oder einer Lateralschwingung des Turmes, insbesondere einer ersten oder zweiten Eigenform des Turms und/oder quer zu einer Rotationsachse (R) des Rotors, und/oder zur Aufrechterhaltung einer Richtung eines den Rotor antreibenden Drehmoments und/oder auch in dem ersten Betriebsmodus auf Basis einer Schwingung des Turmes; und/oder
- Mittel zum Umsetzen einer windkraftbedingten Rotation des Rotors in dem zweiten Betriebsmodus in elektrische Leistung mithilfe der Generatoreinrichtung, und Mittel zum Nutzen dieser elektrische Leistung zur Verstellung des wenigstens einen Rotorblatts um die Blatteinstellachse und/oder zur Versorgung von Verbrauchern der Windenergieanlage und/oder zum Abgeben von dieser elektrische Leistung der Windenergieanlage in das elektrische Netz und/oder Speichern dieser elektrische Leistung; und/oder
- Mittel zum Verstellen des Rotors in dem ersten und/oder zweiten Betriebsmodus in Abhängigkeit von einer Windrichtung um eine Nachführachse quer zu seiner Rotationsachse.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit, insbesondere wenigstens eine CPU, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Windenergieanlage steuern bzw. betreiben kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch die Steuerung bzw. ihr(e) Mittel.

Weitere Vorteile und Merkmale ergeben sich aus den Unteransprüchen und den Ausführungsbeispielen. Hierzu zeigt, teilweise schematisiert:
- Fig. 1:: eine Windenergieanlage mit einer Steuerung zum Betreiben der Windenergieanlage nach einer Ausführung der vorliegenden Erfindung; und
- Fig. 2:: ein Verfahren zum Betreiben der Windenergieanlage nach einer Ausführung der vorliegenden Erfindung.

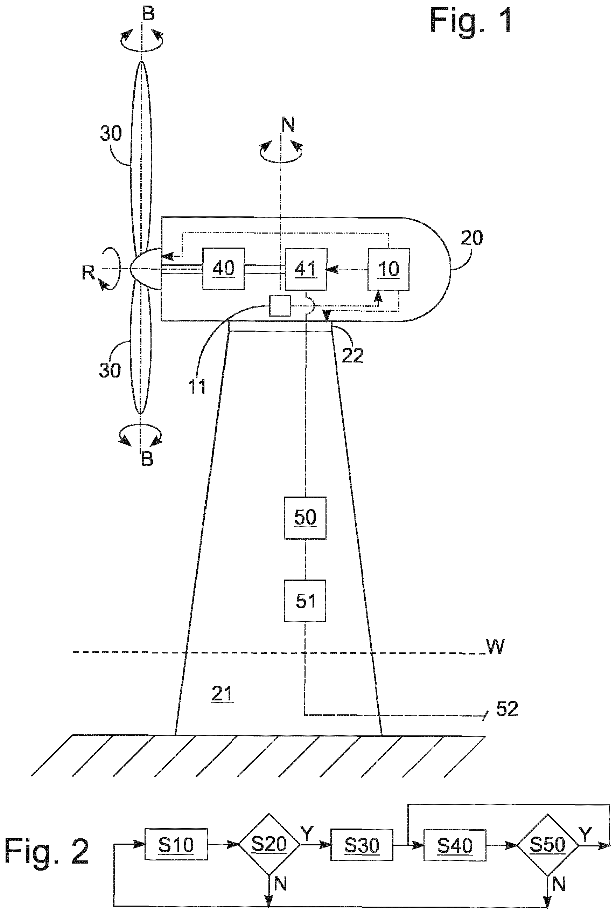

Fig. 1 zeigt eine Windenergieanlage mit einer Steuerung 10 zum Betreiben der Windenergieanlage nach einer Ausführung der vorliegenden Erfindung mit einem Turm, der einen Turmkopf in Form einer Maschinengondel 20 und einen Turmrumpf 21 aufweist, auf dem die Maschinengondel 20 durch einen Antrieb 22 um eine vertikale Nachführachse N drehbar ist und so einer Windrichtung nachgeführt werden kann, wie in Fig. 1 durch einen Verstellpfeil angedeutet. Hierzu steuert die Steuerung 10 den Antrieb 22 an, wie in Fig. 1 durch einen Steuerungspfeil angedeutet.

Der Turm(rumpf 21) steht im Ausführungsbeispiel auf See, wie durch eine Wasseroberfläche W angedeutet.

In der Maschinengondel 20 ist ein Rotor mit Rotorblättern 30 um eine Rotationachse R drehbar gelagert, wie in Fig. 1 durch einen Rotationspfeil angedeutet.

Die Rotorblätter 30 sind jeweils um ihre Blatteinstellachse B verdrehbar, wie in Fig. 1 durch Verstellpfeile angedeutet. Hierzu steuert die Steuerung 10 einen Blattverstellantrieb an, wie in Fig. 1 durch einen Steuerungspfeil angedeutet.

Der Rotor ist über ein Getriebe 40 mit einem Generator 41 einer Generatoreinrichtung gekoppelt.

Die Steuerung 10 regelt ein den Rotor bremsendes Gegendrehmoment, das der Generator 41 bei bzw. durch Umsetzung einer Rotation des Rotors in elektrische Energie aufprägt, welche an Verbraucher 50 und/oder Speicher 51 und/oder ein elektrisches Netz 52 abgegeben wird.

Bei einem in Fig. 2 dargestellten Verfahren zum Betreiben der Windenergieanlage nach einer Ausführung der vorliegenden Erfindung werden bzw. sind in einem Schritt S10 bzw. ersten Betriebsmodus in Form eines Teillastbetriebs die Rotorblätter auf einen Pitchwinkel von etwa 0° eingestellt und eine windkraftbedingte Rotation des Rotors wird mithilfe der Generatoreinrichtung 40, 41 in elektrische Leistung umgesetzt, welche von der Windenergieanlage in das elektrisches Netz 52 abgegeben wird. In einem Vollastbetrieb werden die Rotorblätter mit einem veränderlichen Blatteinstellwinkel zwischen 0° und 45° betrieben.

Falls eine Störung der Windenergieanlage oder des elektrischen Netzes 52 oder eine Windgeschwindigkeit oberhalb einer vorgegebenen Abschalt(wind)geschwindigkeit erfasst wird (S20: "Y"), schaltet die Steuerung 10 in einen zweiten Betriebsmodus um. Hierzu werden die Rotorblätter um etwa 84° bis 94° um ihre Blatteinstellachsen in Richtung der Fahnenstellung, d.h. ihre Vorderkanten (links in Fig. 1) in die (Wind)Anströmung (hinein)gedreht (Fig. 2: S30). Andernfalls (S20: "N") wird der erste Betriebsmodus beibehalten oder in einen weiteren Betriebsmodus umgeschaltet (nicht dargestellt).

In einem Schritt S40 bzw. dem zweiten Betriebsmodus wird das von der Generatoreinrichtung beim bzw. durch das Erzeugen von elektrischer Energie aufgeprägte Gegendrehmoment so geregelt bzw. moduliert, dass eine Lateralschwingung des Turmes quer zur Rotationsachse R und Nachführachse N (senkrecht auf der Blattebene der Fig. 1) reduziert wird.

Hierzu erfasst ein Beschleunigungssensor 11 eine Lateralbeschleunigung des Turmkopfes 20 und übermittelt ein entsprechendes Signal an die Steuerung 10, wie in Fig. 1 durch einen Signalpfeil angedeutet.

Diese ermittelt basierend hierauf eine Ausgangsgröße, die beispielsweise proportional zur, in einer Ausführung bandbegrenzten, Lateralbeschleunigung sein kann, wobei der Proportionalitätsfaktor seinerseits vom, in einer Ausführung asymmetrisch rampenbegrenzten und/oder geglätteten, Betrag der Lateralbeschleunigung abhängen kann, in einer Ausführung linear oder nicht-linear und/oder durch eine Ober- und/oder Untergrenze begrenzt. Die um 90° phasenverschobene und gegebenenfalls harmonisierte Ausgangsgröße bildet eine Stellgröße, die zur Regelung des von der Generatoreinrichtung beim bzw. durch das Erzeugen von elektrischer Energie aufgeprägten Gegendrehmoments verwendet wird, beispielsweise ein Generator-Solldrehmoment bildet oder einem gewünschten Generator-Solldrehmomentmittelwert überlagert wird.

Dabei wird das Gegendrehmoment so geregelt, dass ein Torsionsmoment im Rotor und Generatoreinrichtung 40, 41 umfassenden Triebstrang sein Vorzeichen nicht ändert, um ein Rasseln im Getriebe 40 zu vermeiden.

Solange die Störung der Windenergieanlage bzw. des elektrischen Netzes 52 bzw. eine Windgeschwindigkeit oberhalb einer vorgegebenen Abschalt(wind)geschwindigkeit erfasst wird (S50: "Y"), wird Schritt S40 bzw. der zweite Betriebsmodus weiter ausgeführt, andernfalls (S50: "N"), kehrt das Verfahren bzw. die Steuerung 10 bzw. die Windenergieanlage zu Schritt S10 bzw. dem ersten Betriebsmodus zurück.

## Patentansprüche

1. Verfahren zum Betreiben einer Windenergieanlage, die einen Turm (20-22) und einen am Turmkopf (20) angeordneten Rotor mit wenigstens einem Rotorblatt (30) aufweist, das um eine Blatteinstellachse (B) verstellbar ist, wobei:
- in einem ersten Betriebsmodus (S10) das wenigstens eine Rotorblatt eine Betriebswinkelstellung um die Blatteinstellachse aufweist und eine windkraftbedingte Rotation des Rotors mithilfe einer Generatoreinrichtung (40, 41) in elektrische Leistung umgesetzt wird, welche von der Windenergieanlage in ein elektrisches Netz (52) abgegeben und/oder gespeichert wird; und
- in einem zweiten Betriebsmodus (S40) das wenigstens eine Rotorblatt um wenigstens 60° und/oder höchstens 110° um die Blatteinstellachse gegenüber der Betriebswinkelstellung in eine Dämpfungswinkelstellung verstellt ist und ein den Rotor bremsendes Gegendrehmoment mithilfe der Generatoreinrichtung auf Basis einer Schwingung des Turmes geregelt wird.

2. Verfahren nach Anspruch 1, **dadurch gekennzeichnet, dass** von dem ersten in den zweiten Betriebsmodus umgeschaltet wird, falls eine Windgeschwindigkeit eine Abschaltgeschwindigkeit übersteigt und/oder falls ein Störungsfall erfasst wird.

3. Verfahren nach einem der vorhergehenden Ansprüche, **dadurch gekennzeichnet, dass** das den Rotor bremsende Gegendrehmoment auf Basis wenigstens eines, insbesondere zwischen 25% und 70% oder zwischen 70% und 100% einer Turmhöhe und/oder in oder unter einer den Rotor lagernden Maschinengondel des Turmes angeordneten, Schwingungssensors (11) und/oder einer Lateralschwingung des Turmes, insbesondere einer ersten oder zweiten Eigenform des Turms und/oder quer zu einer Rotationsachse (R) des Rotors, und/oder zur Aufrechterhaltung einer Richtung eines den Rotor antreibenden Drehmoments und/oder auch in dem ersten Betriebsmodus auf Basis einer Schwingung des Turmes geregelt wird.

4. Verfahren nach einem der vorhergehenden Ansprüche, **dadurch gekennzeichnet, dass** in dem zweiten Betriebsmodus eine windkraftbedingte Rotation des Rotors mithilfe der Generatoreinrichtung in elektrische Leistung umgesetzt wird, welche zur Verstellung des wenigstens einen Rotorblatts um die Blatteinstellachse und/oder zur Versorgung von Verbrauchern (50) der Windenergieanlage genutzt und/oder von der Windenergieanlage in das elektrische Netz abgegeben und/oder gespeichert wird, wobei diese abgegebene bzw. gespeicherte Leistung höchstens 2% einer Nennleistung der Windenergieanlage beträgt, und/oder dass in dem zweiten Betriebsmodus eine Drehzahl des Rotors höchstens 20% einer Nenndrehzahl der Windenergieanlage beträgt.

5. Verfahren nach einem der vorhergehenden Ansprüche, **dadurch gekennzeichnet, dass** der Turm in einem Gewässer angeordnet ist und/oder die Generatoreinrichtung ein Getriebe (40) und/oder der Rotor wenigstens zwei Rotorblätter (30) aufweist, die jeweils um eine Blatteinstellachse (B) verstellbar sind, in dem ersten Betriebsmodus eine, insbesondere dieselbe, Betriebswinkelstellung um ihre Blatteinstellachse aufweisen und in dem zweiten Betriebsmodus jeweils um wenigstens 60° und/oder höchstens 110° um die Blatteinstellachse gegenüber der Betriebswinkelstellung in eine, insbesondere dieselbe, Dämpfungswinkelstellung verstellt sind.

6. Verfahren nach einem der vorhergehenden Ansprüche, **dadurch gekennzeichnet, dass** das wenigstens eine Rotorblatt aus der Betriebswinkelstellung um wenigstens 80° und/oder höchstens 100° um die Blatteinstellachse in eine Fahnenstellung verstellbar ist, in der der Rotor eine Windanströmung parallel zu seiner Rotationsachse in eine minimales Drehzahl umsetzt.

7. Verfahren nach einem der vorhergehenden Ansprüche, **dadurch gekennzeichnet, dass** der Rotor in dem ersten und/oder zweiten Betriebsmodus in Abhängigkeit von einer Windrichtung um eine Nachführachse (N) quer zu seiner Rotationsachse verstellt wird.

8. Steuerung (10) für eine Windenergieanlage, wobei die Windenergieanlage einen Turm (20-22) und einen am Turmkopf (20) angeordneten Rotor mit wenigstens einem Rotorblatt (30) aufweist, das um eine Blatteinstellachse (B) verstellbar ist, wobei die Steuerung zur Durchführung eines Verfahrens nach einem der vorhergehenden Ansprüche eingerichtet ist und/oder aufweist:
- einen ersten Betriebsmodus, in dem das wenigstens eine Rotorblatt eine Betriebswinkelstellung um die Blatteinstellachse aufweist und eine windkraftbedingte Rotation des Rotors mithilfe einer Generatoreinrichtung (40, 41) in elektrische Leistung umgesetzt wird, welche von der Windenergieanlage in ein elektrisches Netz (52) abgegeben und/oder gespeichert wird; und
- einen zweiten Betriebsmodus, in dem das wenigstens eine Rotorblatt um wenigstens 60° und/oder höchstens 110° um die Blatteinstellachse gegenüber der Betriebswinkelstellung in eine Dämpfungswinkelstellung verstellt ist und **dadurch gekennzeichnet, dass** ein den Rotor bremsendes Gegendrehmoment mithilfe der Generatoreinrichtung auf Basis einer Schwingung des Turmes geregelt wird.

9. Windenergieanlage mit einem Turm (20, 21), einem am Turmkopf, insbesondere einer Maschinengondel (20), angeordneten Rotor mit wenigstens einem Rotorblatt (30), das um eine Blatteinstellachse (B) verstellbar ist, und einer Steuerung (10) nach dem vorhergehenden Anspruch.

10. Computerprogrammprodukt mit einem Programmcode, der auf einem von einem Computer lesbaren Medium gespeichert ist, zur Durchführung eines Verfahrens nach einem der vorhergehenden Ansprüche 1 bis 7.

## Claims

1. A method of operating a wind energy installation comprising a tower (20-22) and a rotor arranged at the top (20) of the tower and having at least one rotor blade (30) which can be adjusted about a blade setting axis (B), wherein:
- in a first mode of operation (S10), the at least one rotor blade has an operating angular position about the blade setting axis, and a rotation of the rotor which is caused by wind force is converted into electrical power with the aid of a generator device (40, 41), which electrical power is transferred from the wind energy installation to an electrical network (52) and / or is stored; and
- in a second mode of operation (S40), the at least one rotor blade is adjusted by at least 60° and / or by a maximum of 110° about the blade setting axis with respect to the operating angular position into a damping angular position, and a counter torque which slows down the rotor is controlled with the aid of the generator device on the basis of a vibration of the tower.

2. The method according to claim 1, **characterised in that** a switch from the first mode of operation into the second mode of operation is carried out in case a wind speed exceeds a cut-out speed and / or in case a malfunction is detected.

3. The method according to any one of the preceding claims, **characterised in that** the counter torque which slows down the rotor is controlled on the basis of at least one vibration sensor (11), in particular on the basis of a vibration sensor (11) which is arranged at between 25% and 70% or between 70% and 100% of a tower height and / or in or below a nacelle of the tower supporting the rotor, and / or on the basis of a lateral vibration of the tower, in particular on the basis of a lateral vibration of a first or second natural mode of the tower, and / or transverse to an axis of rotation (R) of the rotor, and / or for maintaining a direction of a torque driving the rotor and / or also on the basis of a vibration of the tower in the first mode of operation.

4. The method according to any one of the preceding claims, **characterised in that**, in the second mode of operation, a rotation of the rotor which is caused by wind force is converted into electrical power with the aid of the generator device, which electrical power is used for adjusting the at least one rotor blade about the blade setting axis and / or for supplying electrical loads (50) of the wind energy installation, and / or is output from the wind energy installation to the electrical network and / or is stored, wherein this power which is output or stored amounts to a maximum of 2% of a nominal power of the wind energy installation, and / or **in that**, in the second mode of operation, a rotational speed of the rotor amounts to a maximum of 20% of a nominal speed of the wind energy installation.

5. The method according to any one of the preceding claims, **characterised in that** the tower is arranged in a body of water and / or that the generator device has a transmission (40) and / or the rotor comprises at least two rotor blades (30), each of which can be adjusted about a respective blade setting axis (B), and each of which have an operating angular position, in particular the same operating angular position, about their respective blade setting axes in the first mode of operation, and each of which are adjusted by at least 60° and / or by a maximum of 110° about their respective blade setting axes with respect to the operating angular position into a damping angular position, in particular the same damping angular position, in the second mode of operation.

6. The method according to any one of the preceding claims, **characterised in that** the at least one rotor blade can be adjusted about the blade setting axis, by at least 80° and / or by a maximum of 100°, from the operating angular position into a feathering position, in which the rotor converts an inflow of wind parallel to its rotational axis into a minimum rotational speed.

7. The method according to any one of the preceding claims, **characterised in that**, in the first and / or the second mode of operation, the rotor is adjusted about a tracking axis (N) transverse to its axis of rotation as a function of a wind direction.

8. A control unit (10) for a wind energy installation, wherein the wind energy installation comprises a tower (20-22) and a rotor arranged at the top (20) of the tower, wherein the rotor has at least one rotor blade (30) which can be adjusted about a blade setting axis (B), wherein the control unit is arranged to carry out a method according to any one of the preceding claims and / or wherein the control unit comprises:
- a first mode of operation in which the at least one rotor blade has an operating angular position about the blade setting axis, and a rotation of the rotor which is caused by wind force is converted into electrical power with the aid of a generator device (40, 41), which electrical power is transferred from the wind energy installation to an electrical network (52) and / or is stored; and
- a second mode of operation in which the at least one rotor blade is adjusted by at least 60° and / or by a maximum of 110° about the blade setting axis with respect to the operating angular position into a damping angular position, and **characterised in that** a counter torque which slows down the rotor is controlled with the aid of the generator device on the basis of a vibration of the tower.

9. A wind energy installation comprising a tower (20, 21), a rotor having at least one rotor blade (30) which can be adjusted about a blade setting axis (B), which rotor is arranged at the top of the tower, in particular at a nacelle (20), and a control unit (10) according to the preceding claim.

10. A computer program product which comprises a program code which is stored on a computer readable medium, for carrying out a method according to any one of the preceding claims 1 to 7.

## Revendications

1. Procédé pour faire fonctionner une éolienne, qui présente une tour (20-22) et un rotor disposé sur la tête de tour (20) avec au moins une pale de rotor (30), qui peut être déplacée autour d'un axe de réglage de pale (B), dans lequel :
- dans un premier mode de fonctionnement (S10) la au moins une pale de rotor présente une position angulaire de fonctionnement autour de l'axe de réglage de pale et une rotation du rotor liée à la force du vent est convertie à l'aide d'un système de générateur (40, 41) en puissance électrique, laquelle est distribuée par l'éolienne dans un réseau électrique (52) et/ou accumulée ; et
- dans un deuxième mode de fonctionnement (S40) la au moins une pale de rotor est déplacée d'au moins 60° et/ou au maximum de 110° autour de l'axe de réglage de pale par rapport à la position angulaire de fonctionnement dans une position angulaire d'amortissement et un couple antagoniste freinant le rotor est régulé à l'aide du système de générateur sur la base d'une oscillation de la tour.

2. Procédé selon la revendication 1, **caractérisé en ce qu'**un basculement s'opère du premier dans le deuxième mode de fonctionnement, si une vitesse du vent dépasse une vitesse de coupure et/ou si une panne est détectée.

3. Procédé selon l'une quelconque des revendications précédentes, **caractérisé en ce que** le couple antagoniste freinant le rotor est régulé sur la base d'au moins un capteur d'oscillation (11) disposé à, en particulier entre 25 % et 70 % ou entre 70 % et 100 % d'une hauteur de tour et/ou dans ou sous une nacelle de la tour logeant le rotor, et/ou d'une oscillation latérale de la tour, en particulier d'une première ou deuxième forme propre de la tour et/ou transversalement par rapport à un axe de rotation (R) du rotor, et/ou pour le maintien d'une direction d'un couple entraînant le rotor et/ou également dans le premier mode de fonctionnement sur la base d'une oscillation de la tour.

4. Procédé selon l'une quelconque des revendications précédentes, **caractérisé en ce que** dans le deuxième mode de fonctionnement une rotation du rotor liée à la force du vent est convertie en puissance électrique à l'aide du système de générateur, laquelle est utilisée pour le déplacement de la au moins une pale de rotor autour de l'axe de réglage de pale et/ou pour l'alimentation de consommateurs (50) de l'éolienne et/ou distribuée par l'éolienne dans le réseau électrique et/ou accumulée, dans lequel cette puissance distribuée ou accumulée est égale au maximum à 2 % d'une puissance nominale de l'éolienne, et/ou que dans le deuxième mode de fonctionnement une vitesse de rotation du rotor est égale au maximum à 20 % d'une vitesse de rotation nominale de l'éolienne.

5. Procédé selon l'une quelconque des revendications précédentes, **caractérisé en ce que** la tour est disposée dans une étendue d'eau et/ou le système de générateur présente une transmission (40) et/ou le rotor au moins deux pales de rotor (30), qui peuvent être déplacées respectivement autour d'un axe de réglage de pale (B), dans le premier mode de fonctionnement présentent une position angulaire de fonctionnement, en particulier la même, autour de leur axe de réglage de pale et dans le deuxième mode de fonctionnement sont déplacées respectivement d'au moins 60° et/ou au maximum de 110° autour de l'axe de réglage de pale par rapport à la position angulaire de fonctionnement dans une position angulaire d'amortissement, en particulier la même.

6. Procédé selon l'une quelconque des revendications précédentes, **caractérisé en ce que** la au moins une pale de rotor peut être déplacée à partir de la position angulaire de fonctionnement d'au moins 80° et/ou au maximum de 100° autour de l'axe de réglage de pale dans une position de mise en drapeau, dans laquelle le rotor convertit une exposition au vent parallèle à son axe de rotation en une vitesse de rotation minimale.

7. Procédé selon l'une quelconque des revendications précédentes, **caractérisé en ce que** le rotor dans le premier et/ou deuxième mode de fonctionnement est déplacé en fonction d'une direction du vent autour d'un axe de poursuite (N) transversalement par rapport à son axe de rotation.

8. Commande (10) pour une éolienne, dans laquelle l'éolienne présente une tour (20-22) et un rotor disposé sur la tête de tour (20) avec au moins une pale de rotor (30), qui peut être déplacée autour d'un axe de réglage de pale (B), dans laquelle la commande est conçue pour la mise en œuvre d'un procédé selon l'une quelconque des revendications précédentes et/ou présente :
- un premier mode de fonctionnement, dans lequel la au moins une pale de rotor présente une position angulaire de fonctionnement autour de l'axe de réglage de pale et une rotation du rotor liée à la force du vent est convertie à l'aide d'un système de générateur (40, 41) en puissance électrique, laquelle est distribuée par l'éolienne dans un réseau électrique (52) et/ou accumulée ; et
- un deuxième mode de fonctionnement, dans lequel la au moins une pale de rotor est déplacée d'au moins 60° et/ou au maximum de 110° autour de l'axe de réglage de pale par rapport à la position angulaire de fonctionnement dans une position angulaire d'amortissement et **caractérisé en ce qu'**un couple antagoniste freinant le rotor est régulé à l'aide du système de générateur sur la base d'une oscillation de la tour.

9. Eolienne avec une tour (20, 21), un rotor disposé sur la tête de tour, en particulier une nacelle (20), avec au moins une pale de rotor (30), qui peut être déplacée autour d'un axe de réglage de pale (B), et une commande (10) selon la revendication précédente.

10. Produit-programme d'ordinateur avec un code de programme, qui est mis en mémoire sur un support lisible par un ordinateur, pour la mise en œuvre d'un procédé selon l'une quelconque des revendications précédentes 1 à 7.
